# EUROPEAN PATENT SPECIFICATION

(11) **EP 1 037 708 B1**
(45) Date of publication and mention of the grant of the patent: **11.09.2002**
(21) Application number: 98959120.1
(22) Date of filing: 07.12.1998
(51) Int. Cl.: B01L 11/00, B01L 3/14

(54) **LOADING STATION FOR A ROBOTIC SYSTEM**
LADESTELLE FÜR EIN ROBOTISCHES SYSTEM
POSTE DE CHARGEMENT POUR SYSTEME ROBOTIQUE

(30) Priority: 12.12.1997 IL 12258197
(43) Date of publication of application: 27.09.2000
(73) Proprietor: Trek Diagnostic Systems, Ltd., Doar Glil Yam 46905 (IL); Trek Diagnostic Systems, Inc., West Lake, Ohio 44145 (US)
(72) Inventor: TACHE, Gabriel, Valentin, 67431 Tel Aviv (IL)
(74) Representative: Exell, Jonathan Mark
(86) International application number: IL9800594
(87) International publication number: WO99030824

(56) References cited:
- EP-A- 0 258 565
- WO-A-96/07479
- US-A- 4 353 552
- US-A- 4 678 894
- US-A- 5 700 429

## Description

### FIELD OF THE INVENTION

The present invention is generally in the field of robotics and concerns a method and system for loading items to a robotic system to allow the robotic system to identify and locate each of the items. The present invention further relates to item holding racks, adapted to cooperate with such a system and which may be used to transfer the items to the robotic system.

### BACKGROUND OF THE INVENTION

Robotic systems are generally adapted to handle and manipulate items for various purposes. Specific examples are various robotic systems used in medical diagnostics in which specimens are handled, processed and then analyzed automatically to eventually generate a diagnostic report. Such diagnostic systems are typically adapted to handle simultaneously a plurality of specimens and furthermore employ a large number of reagents for the different chemical, biochemical or biological tests conducted within the system.

In conventional robotic diagnostic systems, the reagents, typically liquids, are held in containers which are placed in designated receptacles. If the operator mistakenly places a reagent in an incorrect receptacle, the entire task of the system may be incorrectly performed.

A similar problem occurs also with respect to the specimens. It is today typically the practice to associate each test tube or other vessel containing a specimen to be tested, a tag, typically a bar code, which identifies the specimen. The operator then scans the bar code and thereafter places the specimen-containing vessel in the location ascribed to it by the system. However, mistakes in placing may occur which will give rise to an incorrect match between a patient and a specimen.

The document US-A-4 678 894 describes a loading station having a sensing panel with IR-detectors.

### GENERAL DESCRIPTION OF THE INVENTION

It is an object of the invention to provide a method, system and device for loading items to a robotic system in a manner which will essentially avoid mistakes in identification of the items by the robotic system.

By a first aspect the present invention provides a loading station for loading items to a robotic system such that each of the items will be identified and located, the station comprising:
a pressure sensitive sensing panel on which the items are placed and which has a sensing arrangement for emitting a location data signal responsive to placing an item thereon, and being indicative of the item's location on the tray;
a reading assembly for reading a sign allocated for each different item prior to placing it on the tray and emitting an identity data signal corresponding to said sign; and
a processor for receiving said location data signal and said identity data signal, ascribing one to the other, and generating an output data signal to be transferred to the robotic system.

By a second aspect, the present invention provides a method for loading items to a robotic system, such that each of the items will be identified and located by the system, the method comprising:
(a) generating a readable item-identifying sign to be associated with each item;
(b) reading the sign of an item by an appropriate sign-reading assembly to generate an identity data signal corresponding to said sign and thereafter placing the item on a panel of a loading station having a pressure panel for identifying the placing and for emitting a location data signal indicative of location of said item on the tray; and
(d) by means of a processor, receiving and matching the identity data signal and the location data signal for each of the items, to generate an output data signal for transferring to said robotic system, so as to allow the robotic system to locate each of the items.

The method of the invention is typically concerned with a batch process wherein a batch of items is placed on the panel of the loading station and then the processor generates an output data signal allowing the robotic system to identify each of the items in the batch.

By a preferred embodiment of the invention the loading station is intended for loading specimens and/or reagents to a diagnostic robotic system for simultaneous handling and performing one or more diagnostic assays on a plurality of biological specimens.

The tray, by one embodiment, is a flat panel, with each of the items, having a flat bottom surface, placed directly thereon. In accordance with another embodiment the panel has integral receptacles adapted to receive the items, each such receptacle being fitted with a sensor.

Typically, the panel has an array of pressure sensors, each one at a different location, actuatable by an item placed on the tray at this location.

In accordance with one application of the invention, the loading station is located adjacent or within the robotic system, and the manipulating head or arm of the robot grabs the items directly from the station.

The items may be loaded on racks which are adapted to cooperate with the loading station and the items are then transported to the robotic system within such racks. The racks are placed on the sensing panel and the racks being designed such that placing of an item in the rack actuates the sensing panel to generate a location data signal. Such a rack has a plurality of receptacles, each adapted to receive one of the items, and when placed on the panel, once an item is placed in the receptacle, the sensor on the panel is actuated.

Each receptacle of the rack is fitted at its bottom face with a mediating actuating member, movable in a vertical direction; once the item is placed in the receptacle, it presses the member which in turn presses the sensor on the panel. Typically, the rack has an identifier tag readable by a reader unit both in the loading station and in the robotic system and the output data signal contains also information bits identifying the particular racks. Once the rack (after loaded with the items) is transported to the robotic system, the reader within the robotic system identifies the rack, and the robotic system can then associate the rack with a specific output data signal of this rack and then identify and localize each of the items contained therein.

A rack adapted for use with a loading station of the invention according to claim 9, is novel and constitutes an independent aspect of the invention. Such a rack has typically a full proof positioning arrangement, e.g. a dedicated shape, positioning pins or notches, etc., so as to ensure accurate placement thereof on the panel.

The reading assembly may typically comprise a bar-code reader, with the signs allocated to each item being accordingly bar-codes. The bar-code may be applied on a sticker attached to the item or may be placed on a separate substrate, e.g. sheet or board, in a manner allowing to associate it with the item. The bar-code reader then scans the bar-code prior to placing the item on the panel. The bar-code reader may be a manually held reader, it may be a fixed reader on which the item is placed or passed by so that the bar-code typically on a sticker thereof, can be read, etc.

The output data signal may be transferred to the robotic system in line by data transfer lines, or may be transferred on a transferable storage media, e.g. a data storage disk or tape, or by transmission, etc.

The invention will now be described with reference to a specific, non-limiting embodiment, shown in the annexed drawings.

### BRIEF DESCRIPTION OF THE DRAWINGS

**Fig. 1** is a perspective view of a loading station, in accordance with an embodiment of the invention, for loading specimens and reagents to a robotic diagnostic system;
**Fig. 2** shows a loading station of Fig. 1, on which there are placed a specimen-holding rack and a reagent-holding rack;
**Fig. 3A** is a perspective, partially cut-out, view of a rack (not falling under claim 9);
**Fig. 3B** is a cross-section through lines III-III in Fig. 3A;
**Fig. 4A** is a perspective, partially cut-out view of a rack in accordance with another embodiment of the invention;
**Fig. 4B** is a cross-section through lines IV-IV in Fig. 4A;
**Fig. 5** is a schematic representation of the various steps in the method of the invention.

### DETAILED DESCRIPTION OF THE INVENTION

The specific embodiment illustrated herein refers to a station for loading vials, reagent vessels, etc., into a robotic system where specimens are automatically diagnosed. As will be appreciated, the invention should not be construed as being limited only to this embodiment, and applies, *mutatis mutandis*, also to loading stations of other types of items which are to be loaded into a robotic system. Examples are machining tools, robots of assembly lines, etc.

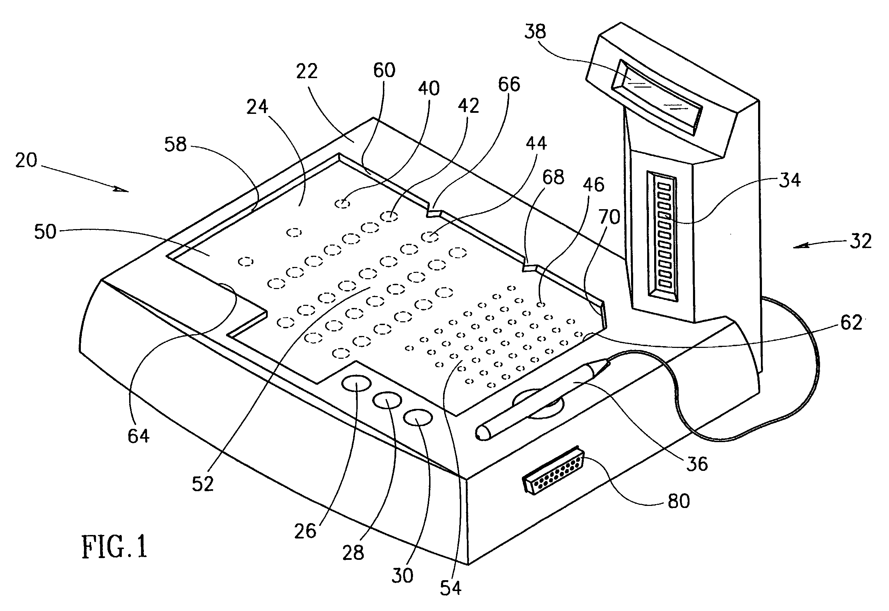

Fig. 1 shows a loading station **20** having a base structure **22,** holding a sensing panel **24,** slightly depressed below the open surface of the base structure, and user operable push buttons **26, 28** and **30.** The loading station further comprises a reading assembly generally designated **32** comprising a stationary bar-code reader **34,** a manually held, pencil-like bar-code reader **36** and an LCD display **38.**

Panel **24** has a plurality of pressure sensors of different dimensions and spatial distribution **40, 42, 44** and **46,** each emitting a data signal once pressure is applied thereon, indicative of its location.

Panel **24** has three rack-receiving zones **50, 52** and **54** and has circumferential edges **58, 60, 62** and **64.** Zone **50** of panel **24** is defined by edge **58,** the respective portions of edges **60** and **64** and by a triangular projection **66;** zone **52** is defined by respective portions of edges **60** and **64** and by triangular projections **66** and **68;** and zone **54** is defined by edge **62,** the respective portions of edges **60** and **64** and triangular projection **68.** As can be seen, the corner **70** of zone **54** is truncated. Thus, while zones **50** and **54** differ from zone **52** by their overall dimension, they are distinguished from one another by the existence of the truncated corner **70** in zone **54.** Thus, a rack which will be designed to fit in one zone cannot be misplaced in another zone.

The station further comprises a data port **80,** for connection to the robotic system or for connection to remote data system, e.g. for receiving information associating each bar-code to an item.

Push buttons **24, 28** and **30** are usable for various manual functions including *on*/*off*, cancel a last input, general reset, etc.

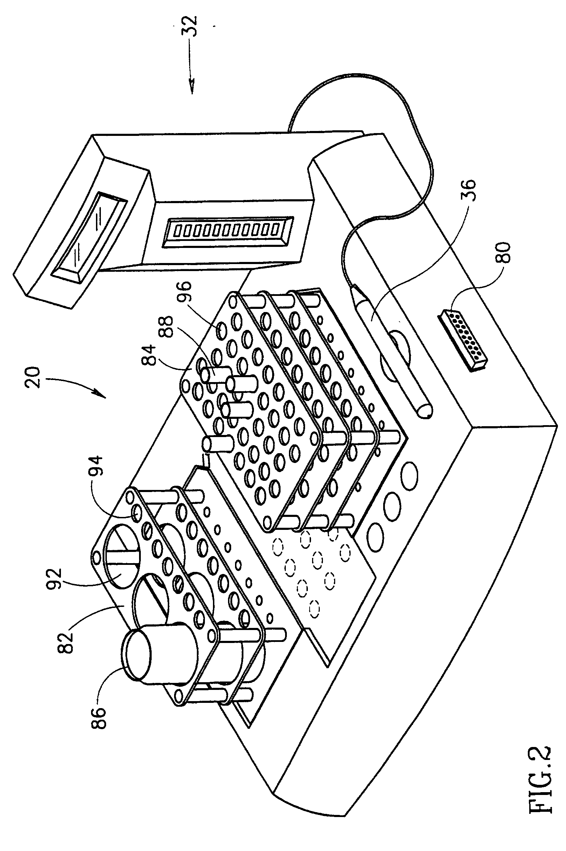

Fig. 2 shows the station **20** fitted with two racks **82** and **84,** the former holding a reagent vessel **86** and the latter a plurality of specimen vials **88.** Receptacles **92** and **94** of rack **82,** and each of receptacles **96** of rack **84,** are placed such that each corresponds to one of respective pressure sensors **40, 42,44** or **46,** respectively, and thus once a vessel or a vial is placed into a receptacle, a respective pressure sensor below is actuated.

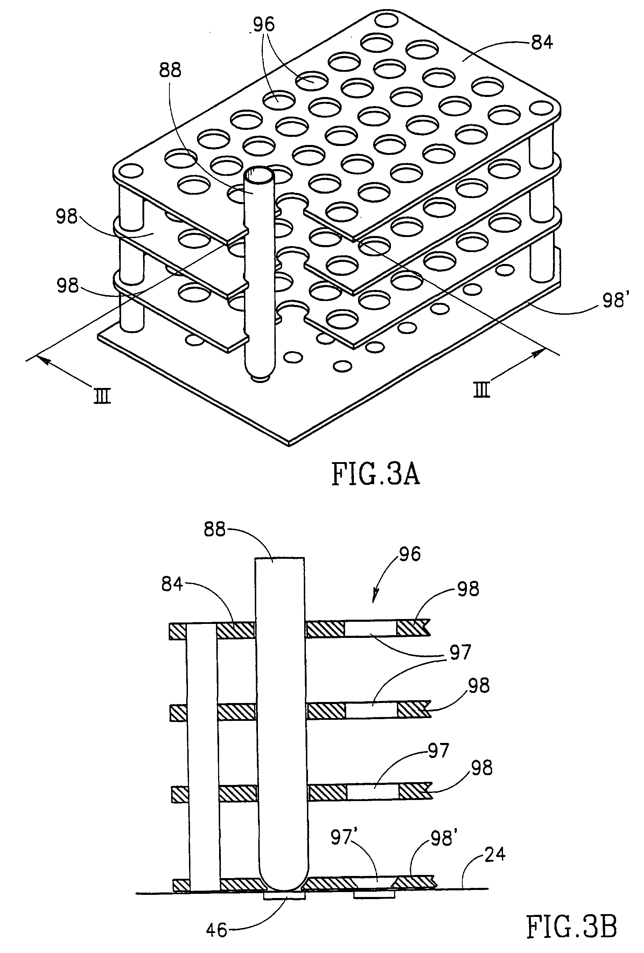

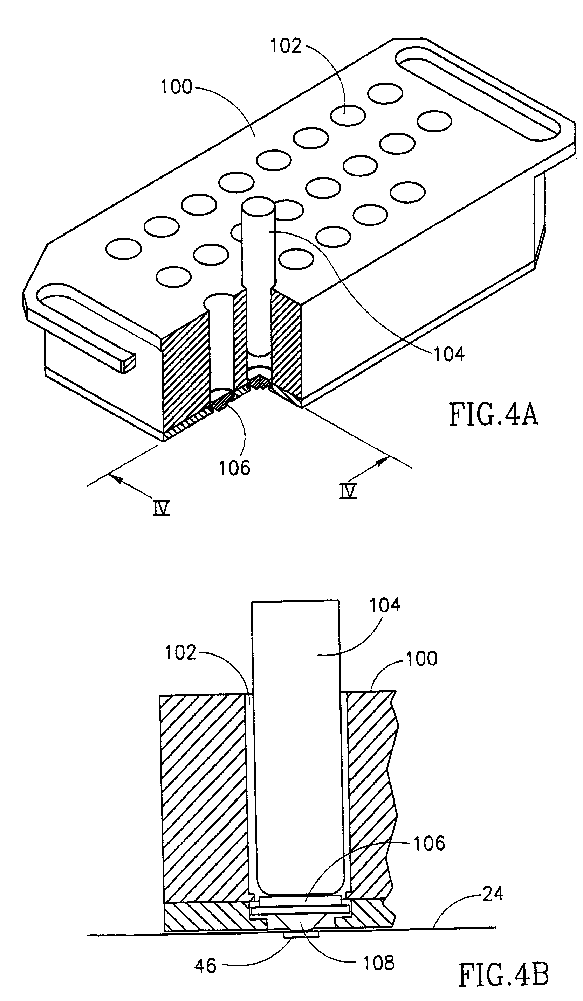

Two different embodiments of racks for use with the loading station of the invention, are shown in Figs. 3 and 4. The rack shown in Fig. 3, is rack **84** which is shown in Fig. 2, but designed so as to fit specifically into zone **54,** with the various receptacles **96** being each above one of the pressure sensors **46,** as can be seen specifically in Fig. 3B. Each of receptacles **96** is defined by aligned openings, consisting of three openings **97** in the racks' upper and two intermediate horizontal boards **98,** which have a diameter corresponding to the external diameter of vial **88,** and an opening **97'** at bottom board **98',** which has a diameter such that it allows only the tip of the curved bottom end of vial **88** to protrude therethrough. Thus, on the one hand, when the rack is lifted, the opening is sufficiently small so as to support the vial **88,** but on the other hand allows the bottom end to actuate pressure sensor **46,** as can specifically be seen in Fig. 3B.

Rack **100** which can be seen in Fig. 4, is designed to fit into zone **52.** This rack has a plurality of bores **102** each being a receptacle adapted to receive a vial **104,** and each fitted with a movable actuating member **106** at its bottom. Actuating member **106** has a tapered bottom end **108** for actuating the pressure sensor **46** (Fig. 4B). Once a vial **104** is placed in the receptacle, pressure is transferred by member **106** to pressure sensor **46** thus inducing the latter to issue a location data signal.

A rack in accordance with the embodiment shown in Fig. 3 can be used for vials or other vessels having a concave bottom and thereby can directly actuate the pressure sensor. Against this, the rack of the kind shown in Fig. 4 is useful in cases where the vessel or the vial has a flat bottom whereby the actuating member serves to focus the pressure onto the pressure sensor.

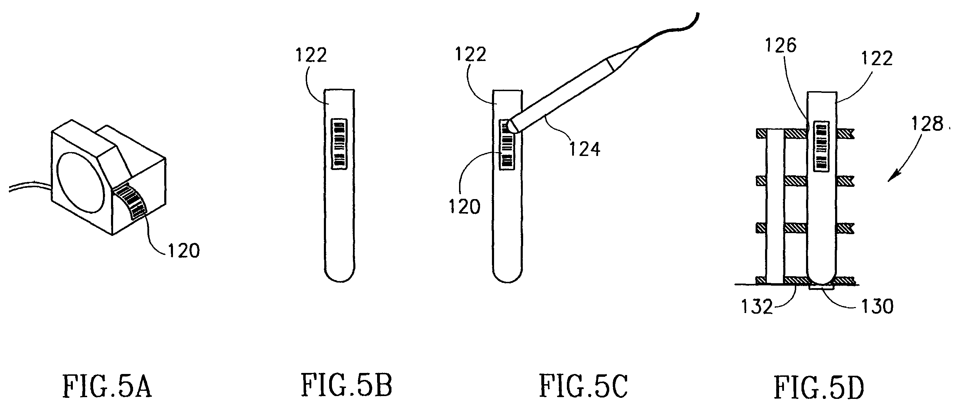

The sequence of operation of a loading station in accordance with the invention is shown in Fig. 5. At a first step (Fig. 5A) a tag **120** is prepared, typically a bar-code, which identifies a specific vessel. The tag **120** may then be fixed on to a vessel **122** which in the specific example is a vial, (Fig. 5B), and then the vessel **122** is brought to the loading station where the sticker is read by an appropriate reading unit, e.g. a manual pen-like bar-code reading unit **124** which reads the bar-code on tag **120** (Fig. 5c). Thereafter (Fig. 5D) the vessel **122** is placed into a receptacle **126** of a rack **128** (of which only a small section is shown) which then actuates the pressure sensor **130** on the sensing pad **132.**

The rack has typically a readable identifiable tag which identifies the rack once it is transferred to the robotic system with its load of vials or vessels. The identified tag may, for example, be an array of small magnets and the reader an array of ball sensors. The pattern of the magents thus identifies the racks. The loading station generates an output data signal, which provides information on identity (established in the steps shown in Fig. 5C) and location (established in the steps shown in Fig. 5D) to provide to the robotic system an identity/location data for each of the different items.

## Claims

1. A loading station (20) for loading items to a robotic system such that each of the items will be identified and located, the station comprising:
a pressure sensitive sensing panel (24) on which the items are placed and which has a sensing arrangement for emitting a location data signal responsive to placing an item thereon and being indicative of the item's location on a tray;
a reading assembly (32) for reading a sign allocated for each different item prior to placing it on the tray and emitting an identity data signal corresponding to said sign; and
a processor for receiving said location data signal and said identity data signal, ascribing one to the other, and generating an output data signal to be transferred to the robotic system.

2. A loading station according to Claim 1, wherein the pressure sensitive panel (24) comprises an array of pressure sensors (40, 42, 44, 46), each one at a different location, actuatable by an item placed on the tray at this location.

3. A loading station according to Claim 1 or 2, adapted to cooperate with a rack, comprising a plurality of receptacles each adapted to receive one of the items, the racks being designed such that placing of an item therein actuates the sensing panel to induce allocation data signal.

4. A loading station according to Claim 3, wherein the items are transported to robotic system within said rack.

5. A loading station according to any one of Claims 1-4, comprising a reader unit adapted to read an identification sign fixed onto said rack, and the output data signal generated by the station allows the robotic system to identify the rack by such a rack-associated sign.

6. A method for loading items to a robotic system, such that each of the items will be identified and located by the system, the method comprising;
(a) generating a readable item-identifying sign to be associated with each item;
(b) reading the sign of an item by an appropriate sign-reading assembly to generate an identify data signal corresponding to said sign and thereafter placing the item on a panel of a loading station having a pressure panel for identifying the placing and for emitting a location data signal indicative of location of said item on the tray; and
(d) by means of a processor, receiving and matching the identify data signal and the location data signal for each of the items, to generate an output data signal for transferring to said robotic system, so as to allow the robotic system to locate each of the items.

7. A method according to Claim 6, comprising placing a batch of items one to the sensing panel and then generating an output data signal for the entire batch.

8. A method according to Claim 7, for loading specimens, reagents or both, to a robotic diagnostic system.

9. A rack for loading items into a robotic system, adapted for cooperation with a loading station according to any one of Claims 3 to 5, wherein the rack comprises a plurality of receptacle bores, each bore fitted at a bottom end thereof with a movable actuating member for activating a sensing panel of the loading station, where said actuating member is displaced responsive to locating an item in the corresponding bore.

## Patentansprüche

1. Ladestelle (20) zum Laden von Gegenständen in ein robotisches System derart, dass jeder der Gegenstände identifiziert und lokalisiert wird, wobei die Stelle umfasst:
eine druckempfindliche Messplatte (24), auf der die Gegenstände platziert sind und die eine Messanordnung zum Emittieren eines Standortdatensignals aufweist, die auf Platzieren eines Gegenstandes darauf anspricht, und den Standort des Gegenstandes auf einem Feld anzeigt;
eine Leseanordnung (32) zum Lesen eines Zeichens, das für jeden einzelnen Gegenstand vor seiner Platzierung auf dem Feld zugeordnet wurde und Emittieren eines Identifizierungsdatensignals, das dem Zeichen entspricht; und
einen Prozessor zum Empfangen des Standortdatensignals und des Identifizierungsdatensignals, wobei eines dem anderen zugeschrieben wird, und Erzeugen eines Ausgabedatensignals, das an das robotische System zu übertragen ist.

2. Ladestelle nach Anspruch 1, worin die druckempfindliche Platte (24) eine Anordnung von Drucksensoren (40, 42, 44, 46) umfasst, jeder an einem anderen Standort, der durch einen auf das Feld an diesem Ort platzierten Gegenstand betätigbar ist.

3. Ladestelle nach Anspruch 1 oder 2, geeignet zum Kooperieren mit einem Gestell, das eine Vielzahl von Aufnahmen umfasst, deren jede geeignet ist, einen der Gegenstände aufzunehmen, wobei die Gestelle derart konstruiert sind, dass Platzieren eines Gegenstandes darin die Messplatte betätigt, um ein Zuordnungsdatensignal zu induzieren.

4. Ladestelle nach Anspruch 3, worin die Gegenstände in dem Gestell zum robotischen System transportiert werden.

5. Ladestelle nach einem der Ansprüche 1-4, umfassend eine Leseeinheit, die geeignet ist, ein auf dem Gestell befestigtes Identifizierungszeichen zu lesen, und das von der Stelle erzeugte Ausgabedatensignal ermöglicht dem robotischen System, das Gestell durch ein solches dem Gestell zugeordnetes Zeichen zu identifizieren.

6. Verfahren zum Laden von Gegenständen in ein robotisches System, derart, dass jeder der Gegenstände vom System identifiziert und lokalisiert wird, wobei das Verfahren umfasst:
(a) Erzeugen eines lesbaren den Gegenstand identifizierenden Zeichens, das jedem Gegenstand zuzuordnen ist;
(b) Lesen des Zeichens eines Gegenstandes durch eine geeignete Zeichenleseanordnung, um ein Identifizierungsdatensignal zu erzeugen, das dem Zeichen entspricht und danach Platzieren des Gegenstandes auf eine Platte einer Ladestelle mit einer Druckplatte zum Identifizieren der Platzierung und zum Emittieren eines Standortdatensignals, das den Standort des Gegenstandes auf dem Feld anzeigt; und
(d) Empfangen und Abgleichen des Identifizierungsdatensignals und des Standortdatensignals für jeden der Gegenstände mittels eines Prozessors, um ein Ausgabedatensignal zum Übertragen zu dem robotischen System zu erzeugen, um dem robotischen System zu ermöglichen, jeden der Gegenstände zu lokalisieren.

7. Verfahren nach Anspruch 6, umfassend einmal Platzieren einer Charge von Gegenständen auf die Messplatte und dann Erzeugen eines Ausgabedatensignals für die gesamte Charge.

8. Verfahren nach Anspruch 7, zum Laden von Proben, Reagenzien oder beidem in ein robotisches Diagnosesystem.

9. Gestell zum Laden von Gegenständen in ein robotisches System, geeignet zur Kooperation mit einer Ladestelle nach einem der Ansprüche 3 bis 5, worin das Gestell eine Vielzahl von Aufnahmebohrungen umfasst, wobei jede Bohrung an einem unteren Ende mit einem beweglichen Betätigungsglied zum Aktivieren einer Messplatte der Ladestelle ausgerüstet ist, wo das Betätigungsglied als Reaktion auf Platzieren eines Gegenstandes in der entsprechenden Bohrung verschoben wird.

## Revendications

1. Poste de chargement (20) pour le chargement d'articles sur un système robotique de sorte que chacun des articles sera identifié et localisé, le poste comprenant :
un panneau (24) de détection sensible à la pression sur lequel les articles sont placés et qui possède un agencement de détection pour émettre un signal de donnée d'emplacement sensible au positionnement d'un article sur sa surface, et étant indicatif du positionnement de l'article sur un plateau ;
un dispositif de lecture (32) pour lire un repère attribué à chaque article différent avant son positionnement sur le plateau et l'émission d'un signal de donnée d'identité correspondant audit repère ; et
un processeur pour recevoir ledit signal de donnée d'emplacement et ledit signal de donnée d'identité, attribuant l'un à l'autre, et générant un signal de donnée de sortie à transférer au système robotique.

2. Poste de chargement selon la revendication 1, dans lequel le panneau (24) sensible à la pression comporte une rangée de capteurs de pression (40, 42, 44, 46), chacun à un emplacement différent, activable par un article placé sur le plateau à cet emplacement.

3. Poste de chargement selon la revendication 1 ou 2, conçu pour coopérer avec un casier, comportant une pluralité de compartiments, chacun conçu pour recevoir l'un des articles, les casiers étant conçus de sorte que le positionnement d'un article dans celui-ci active le panneau de détection pour induire un signal de donnée d'attribution.

4. Poste de chargement selon la revendication 3, dans lequel les articles sont transportés vers un système robotique à l'intérieur dudit casier.

5. Poste de chargement selon l'une quelconque des revendications 1 à 4, comportant une unité de lecture conçue pour lire un repère d'identification fixée sur ledit casier et le signal de donnée de sortie généré par le poste permet au système robotique d'identifier le casier par un tel repère associé au casier.

6. Procédé de chargement d'article dans un système robotique, tel que chacun des articles sera identifié et localisé par le système, le procédé comprenant :
(a) la génération d'un repère d'identification d'article lisible à associer avec chaque article ;
(b) la lecture du repère d'un article par un dispositif de lecture de repère approprié pour générer un signal de donnée d'identité correspondant audit repère et, par la suite, le positionnement de l'article sur un panneau d'un poste de chargement comportant un panneau de pression pour identifier le positionnement et pour émettre un signal de donnée d'emplacement indicatif du positionnement dudit article sur le plateau ; et
(d) au moyen d'un processeur, la réception et la mise en concordance du signal de donnée d'identité et du signal de donnée d'emplacement pour chacun des articles, afin de générer un signal de donnée de sortie pour transfert audit système robotique, de manière à permettre au système robotique de situer chacun des articles.

7. Procédé selon la revendication 6, comprenant le positionnement d'un lot d'articles unique sur le panneau de détection, puis la génération d'un signal de donnée de sortie pour le lot entier.

8. Procédé selon la revendication 7, destiné au chargement d'échantillons, de réactifs ou des deux, dans un système de diagnostic robotique.

9. Casier pour chargement d'article dans un système robotique, conçu pour coopération avec un poste de chargement, selon l'une quelconque des revendications 3 à 5, dans lequel le casier comporte une pluralité d'alésages de compartiment, chaque alésage ajusté au niveau de l'extrémité de partie de fond de celui-ci avec un élément d'active ment mobile pour activer un panneau de détection du poste de chargement, où ledit élément d'active ment est déplacé de manière sensible au positionnement d'un article dans l'alésage correspondant.
